# EUROPÄISCHE PATENTSCHRIFT

(11) **EP 3 099 527 B1**
(45) Veröffentlichungstag und Bekanntmachung des Hinweises auf die Patenterteilung: **16.08.2017**
(21) Anmeldenummer: 15703488.5
(22) Anmeldetag: 26.01.2015
(51) Int. Cl.: B60N 2/44

(54) **STELLANTRIEB FÜR EIN KRAFTFAHRZEUG, INSBESONDERE FÜR EINEN KRAFTFAHRZEUGSITZ**
ACTUATOR FOR A MOTOR VEHICLE, ESPECIALLY FOR A MOTOR VEHICLE SEAT
ACTIONNEUR POUR UN VÉHICULE AUTOMOBILE, NOTAMMENT POUR UN SIÈGE DE VÉHICULE AUTOMOBILE

(30) Priorität: 31.01.2014 DE 102014201742
(43) Veröffentlichungstag der Anmeldung: 07.12.2016
(73) Patentinhaber: Adient Luxembourg Holding S.à r.l., 2453 Luxembourg (LU)
(72) Erfinder: STANIC, Ivica, 41542 Dormagen (DE); HOFFMANN, Andreas, 42489 Wülfrath (DE)
(74) Vertreter: Liedhegener, Ralf
(86) Internationale Anmeldenummer: PCT/EP2015/051467
(87) Internationale Veröffentlichungsnummer: WO 2015/113929

(56) Entgegenhaltungen:
- EP-A2- 0 301 461
- WO-A1-86/06036
- DE-A1-102005 046 356

## Beschreibung

Die Erfindung betrifft einen Stellantrieb für ein Kraftfahrzeug, insbesondere für einen Kraftfahrzeugsitz, mit einem Elektromotor, der eine Ausgangswelle aufweist, einem Getriebe, das mit der Ausgangswelle verbunden ist und ein Getriebegehäuse aufweist, und mit einer Getriebehaltevorrichtung, die das Getriebegehäuse schwenkbar um eine Schwenkachse lagert, wobei ein mit der Schwenkachse fluchtender Wellenabschnitt des Getriebegehäuses von einem Haltebügel der Getriebehaltevorrichtung zumindest teilweise umgriffen ist.

### Stand der Technik

Aus der DE 10 2006 005 499 A1 ist ein Stellantrieb bekannt, bei dem eine Getriebehalterung ein Getriebegehäuse vollständig umfasst, so dass auch eine Ausgangswelle eines Elektromotors von der Getriebehalterung umschlosen ist. Das Getriebegehäuse ist in der Getriebehalterung derart drehbar gelagert, dass Passungenauigkeiten und Toleranzen durch eine Relativdrehung zwischen Getriebegehäuse und Getriebehalterung ausgeglichen werden.

Aus der DE 10 2008 017 017 A1 ist ein Stellantrieb bekannt, dessen Getriebegehäuse in einer Halterung gelagert ist, wobei ein Schwenklager zwischen dem Getriebegehäuse und der Halterung vorgesehen ist und eine Abstützung zwischen dem Getriebegehäuse und der Halterung vorgesehen ist, die dem Schwenklager gegenüber liegt. Die Halterung umschließt das Getriebegehäuse weitgehend und eine Ausgangswelle eines Elektromotors verläuft im Inneren der Halterung.

Die CH 647 305 A offenbart eine motorisch getriebene Linear-Schubvorrichtung mit einer Schubstange, die mittels einer Schraubspindel mit einer Mutter antreibbar ist, wobei sowohl die Mutter als auch die Schraubspindel je für sich drehbar gelagert sind und je für sich einen eigenen Antrieb haben. Die Linear-Schubvorrichtung weist ein Gehäuse auf, das zwei Zapfen umfasst, um die Linear-Schubvorrichtung schwenkbar lagern zu können.

Aus der WO86/06036 A1 ist ein Stellantrieb für einen Kraftfahrzeugsitz bekannt, mit einem Elektromotor, der eine Ausgangswelle aufweist, einem Getriebe, das mit der Ausgangswelle verbunden ist und ein Getriebegehäuse aufweist, und einer Getriebehaltevorrichtung, die das Getriebegehäuse schwenkbar um eine Schwenkachse lagert, wobei mindestens ein mit der Schwenkachse fluchtender Wellenabschnitt des Getriebegehäuses von einem Haltebügel der Getriebehaltevorrichtung umgriffen ist, wobei die Ausgangswelle außerhalb des Haltebügels angeordnet ist.

Die EP 0 301 461 A2 offenbart einen Stellantrieb zum Verstellen eines Elementes relativ zu einem Rahmen, bestehend aus einem Motor mit Antriebswelle, die an einem Ende eine Schnecke umfasst, die ein Schneckenrad antreibt. Schnecke und Schneckenrad gehören zu einem Untersetzungsgetriebe. Die Vorrichtung ist dadurch gekennzeichnet, dass das Untersetzungsgetriebe einen Bügel mit zwei rechtwinklig montierten, sich schneidenden zylindrischen Stutzen umfasst; die Stutzen stehen über eine Öffnung in Verbindung, die ihrem Schnittpunkt entspricht, einer dieser Stutzen nimmt das Schneckenrad auf. Die Vorrichtung ist ebenfalls dadurch gekennzeichnet. dass die Schnecke in einem Rohr liegt, das mit dem Gehäuse des Motors verbunden ist.

Die DE 10 2005 046 356 A1 offenbart eine Getriebe-Antriebseinheit, insbesondere zum Verstellen eines beweglichen Teils im Kraftfahrzeug, mit einem mittels eines Antriebsaggregats antreibbaren Antriebsrad, das auf einer Spindel angeordnet ist, und das Antriebsrad drehbar in einem Trägerrohr gelagert ist, wobei am Trägerrohr ein nachträglich, separat montierbares Aufnahmemodul befestigbar ist, das eine Aufnahme für eine Befestigungsvorrichtung am Kraftfahrzeug oder dem zu verstellenden Teil aufweist.

### Aufgabe

Der Erfindung liegt die Aufgabe zu Grunde, einen Stellantrieb der eingangs genannten Art zu verbessern, insbesondere eine bauraumoptimierte und kostengünstige Getriebehaltevorrichtung zur Verfügung zu stellen.

### Lösung

Diese Aufgabe wird erfindungsgemäß gelöst durch einen Stellantrieb mit den Merkmalen des Anspruchs 1. Dadurch, dass die Ausgangswelle außerhalb des Haltebügels angeordnet ist, umgreift der Haltebügel das Getriebegehäuse nicht vollständig, so dass auf der vom Haltebügel abgewandten Seite der Ausgangswelle kein Bauraum für den Haltebügel benötigt wird. Es steht dadurch eine bauraumoptimierte und kostengünstige Getriebehaltevorrichtung zur Verfügung.

Vorteilhafte Ausgestaltungen, welche einzeln oder in Kombination miteinander eingesetzt werden können, sind Gegenstand der Unteransprüche.

Die Getriebehaltevorrichtung kann in allen an sich bekannten Stellantrieben eingesetzt werden, bei denen eine Schwenkbewegung zwischen der Getriebehaltevorrichtung und dem Getriebe von Vorteil ist. Es können auch Elektromotoren mir einem integrierten oder angesetzten Reduktionsgetriebe verwendet werden, die mit einem weiteren Getriebe verbunden sind. In diesem Fall ist unter dem Begriff Ausgangswelle des Elektromotors eine Ausgangswelle des integrierten oder angesetzten Reduktionsgetriebes zu verstehen. Vorteilhaft weist der Stellantrieb genau einen Elektromotor auf.

Besonders vorteilhaft ist ein erfindungsgemäßer Stellantrieb mit einer zumindest mittelbar von der Ausgangswelle antreibbaren Spindelmutter, die drehbar in dem Getriebegehäuse gelagert ist, und bei dem die Spindelmutter mit einer Spindel derart zusammenwirkt, dass eine Drehung der Spindelmutter zu einer Relativverschiebung zwischen der Spindel und dem Getriebegehäuse führt. Die sich bewegende Spindel kann beispielsweise einen Sitzeinsteller oder einen Fensterheber in einem Kraftfahrzeug betätigen.

Eine bei vorgegebenem Einstellbereich des Stellantriebs minimierte Spindellänge und ein angenehmeres Endanschlaggeräusch lässt sich erreichen, indem in wenigstens einem Endbereich der Spindel ein radial von der Spindel abstehender Spindelanschlag vorgesehen ist, der in einer Endlage des Einstellbereichs des Stellantriebs an einer Stirnfläche der Spindelmutter anliegt und dadurch die Endlage definiert.

Ein Spindelanschlag mit einem aus Kunststoff oder Gummi bestehenden Abschnitt, der an der Stirnfläche der Spindelmutter anliegt, verbessert zusätzlich das Anschlaggeräuschverhalten des Stellantriebs.

Eine besonders bauraumoptimierte Getriebehaltevorrichtung kann erzielt werden, indem der Wellenabschnitt zumindest abschnittsweise an eine Durchgangsöffnung des Getriebegehäuses angrenzt oder in eine Durchgangsöffnung des Getriebegehäuses hineinragt, und der Haltebügel diese Durchgangsöffnung durchläuft. Der Haltebügel kann so den Wellenabschnitt umgreifen und lagern oder zumindest einen Teil einer Lagerstelle bilden.

Vorzugsweise ist der Wellenabschnitt und mit diesem die Schwenkachse der Getriebehaltevorrichtung in radialer Richtung versetzt zu der Ausgangswelle angeordnet. Dadurch kann die Ausgangswelle bauraumsparend außerhalb des Haltebügels angeordnet sein. Vorzugsweise verlaufen die Schwenkachse und die Ausgangswelle parallel, aber versetzt zueinander.

Vorzugsweise umfasst der Haltebügel genau zwei U-Bügel mit jeweils einer ersten Lagerschale, die zusammen mit jeweils einer zweiten Lagerschalen des Schließteils zwei umlaufende Naben zur Lagerung von zwei Wellenabschnitten bilden. Dabei schließt das Schließteil den Haltebügel derart, dass jeder Wellenabschnitt in seiner Umfangsrichtung vollständig von der Getriebehaltevorrichtung umschlossen ist.

Die Getriebehaltevorrichtung kann eine, zwei oder mehrere Lagerstellen für das Getriebe aufweisen. Der Haltebügel umfasst für jede der Lagerstellen eine erste Lagerschale. Mehrere erste Lagerstellen können auch ineinander übergehen. Das Schließteil umfasst für jede der Lagerstellen eine zweite Lagerschale. Eine erste Lagerschale und die zweite Lagerschale ergänzen sich jeweils zu einer den jeweiligen Wellenabschnitt lagernden Nabe, indem die Winkelbereiche der beiden Lagerschalen sich zu einem umlaufenden Zylinder ergänzen. Beispielsweise sind die erste Lagerschale und die zweite Lagerschale jeweils als Halbzylinder ausgebildet, die die Schwenkachse jeweils um 180°umgreifen.

Eine besonders einfache Montage der Getriebehaltevorrichtung an die Wellenabschnitte des Getriebegehäuses lässt sich erreichen, indem das Schließteil mittels einer Clipsverbindung mit dem Haltebügel verbunden ist. Dabei sind vorzugsweise Federarme mit Nasen an dem Schließteil ausgebildet. Die Nasen federn während der Montage der Getriebehaltevorrichtung in Vertiefungen des Haltebügels und sorgen so für eine formschlüssige Verbindung entgegen der Fügerichtung, die vorteilhaft weitgehend parallel zur Spindel liegt.

Das Schließteil kann alternativ oder zusätzlich zu der Clipsverbindung in einer zu der Schwenkachse parallelen Richtung formschlüssig mit dem Haltebügel verbunden sein. Dazu kann mindestens ein Steckprofil des Haltebügels in eine komplementär geformte Schließteilöffnung eingreifen.

Zur Anbindung des Stellantriebs an ein weiteres Bauteil, beispielsweise eine Sitzstruktur, weist die Getriebehaltevorrichtung mindestens eine Öffnung zum Durchführen eines Befestigungsmittels, insbesondere einer Schraube oder eines Niets, auf. Vorzugsweise verläuft eine sich in Längsrichtung des Befestigungsmittels ausgerichtete Mittelachse des Befestigungsmittels parallel zur Spindel. Dadurch ist das Befestigungsmittel vergleichsweise gering belastet. Im Gegensatz zu den aus dem Stand der Technik bekannten Stellvorrichtungen werden die Getriebehaltevorrichtung und die Befestigungsmittel weniger auf Druck belastet.

Die Wellenabschnitte können auch als seitlich vom Getriebegehäuse abstehende Zapfen ausgebildet sind. Die Wellenabschnitte können einteilig mit dem Getriebegehäuse ausgebildet, beispielsweise angespritzt, sein oder an dem Getriebegehäuse befestigt sein.

Der erfindungsgemäße Stellantrieb bietet gegenüber dem Stand der Technik eine Optimierung der Stabilität, wodurch das Geräuschverhalten, der Wirkungsgrad und die Verschleißfestigkeit optimiert werden.

### Figuren und Ausführungsformen der Erfindung

Im Folgenden ist die Erfindung anhand zweier in den Figuren dargestellter vorteilhafter Ausführungsbeispiele näher erläutert. Die Erfindung ist jedoch nicht auf diese Ausführungsbeispiele beschränkt. Es zeigen:
- Fig. 1:: eine perspektivische Ansicht eines ersten Ausführungsbeispiels eines erfindungsgemäßen Stellantriebs in einer ersten Endlage der Spindel,
- Fig. 2:: eine Fig. 1 entsprechende Ansicht mit einem teilweise geschnitten dargestellten Getriebegehäuse,
- Fig. 3:: eine perspektivische Ansicht des Stellantriebs aus Fig. 1 in einer zweiten Endlage der Spindel,
- Fig. 4:: eine Fig. 3 entsprechende Ansicht mit einem teilweise geschnitten dargestellten Getriebegehäuse,
- Fig. 5:: eine perspektivische Ansicht des Stellantriebs aus Fig. 1 ohne Getriebehaltevorrichtung,
- Fig. 6:: eine Detailansicht aus Fig. 1 auf den Bereich der Getriebehalte-vorrichtung,
- Fig. 7:: eine Explosionsdarstellung der Getriebehaltevorrichtung aus Fig. 1,
- Fig. 8:: eine Schnittdarstellung des Stellantriebs aus Fig. 1 im Bereich der Getriebehaltevorrichtung,
- Fig. 9:: eine Fig. 8 ähnliche Schnittdarstellung,
- Fig. 10:: eine perspektivische Ansicht eines zweiten Ausführungsbeispiels eines erfindungsgemäßen Stellantriebs,
- Fig. 11:: eine Fig. 10 entsprechende Ansicht mit einem teilweise geschnitten dargestellten Getriebegehäuse des zweiten Ausführungsbeispiels und
- Fig. 12:: eine Fig. 10 entsprechende Ansicht mit einer Explosionsdarstellung der Getriebehaltevorrichtung des zweiten Ausführungsbeispiels.

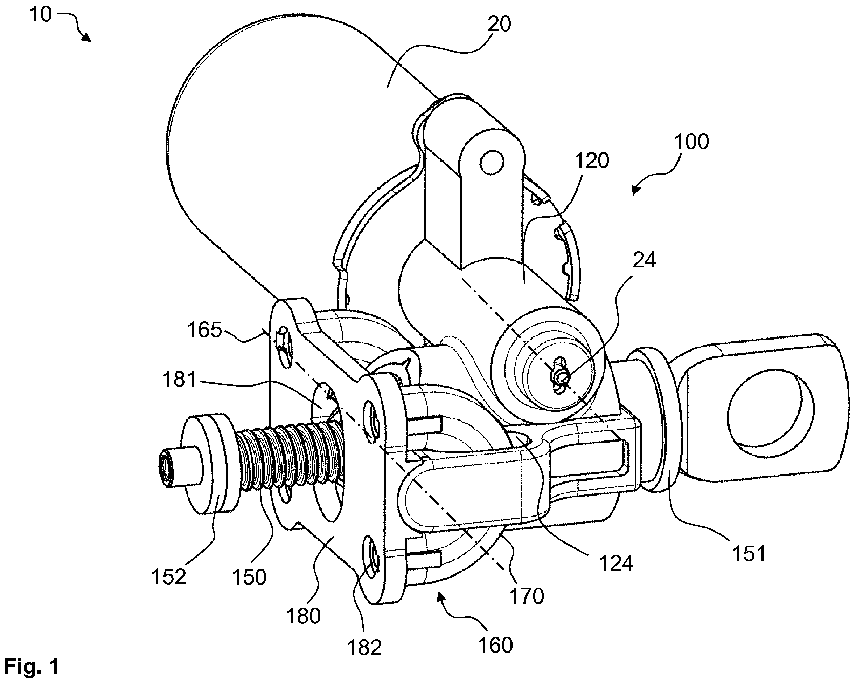

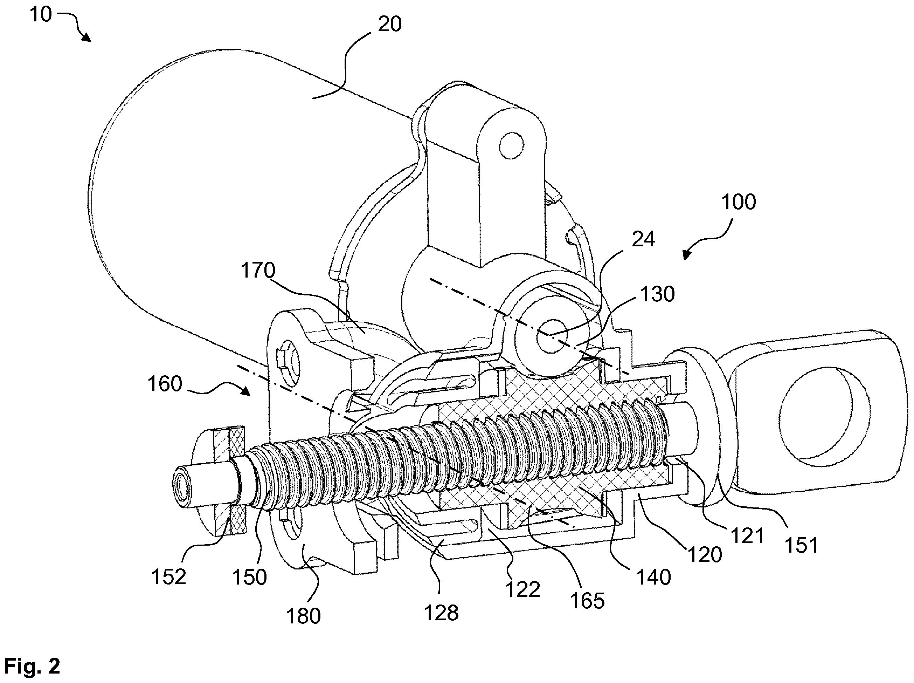

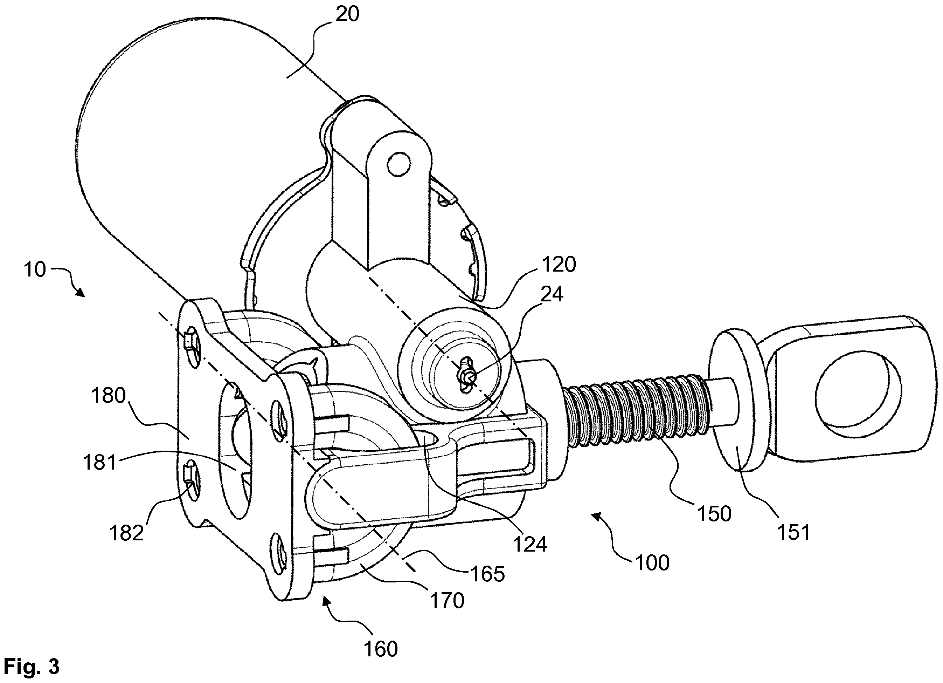

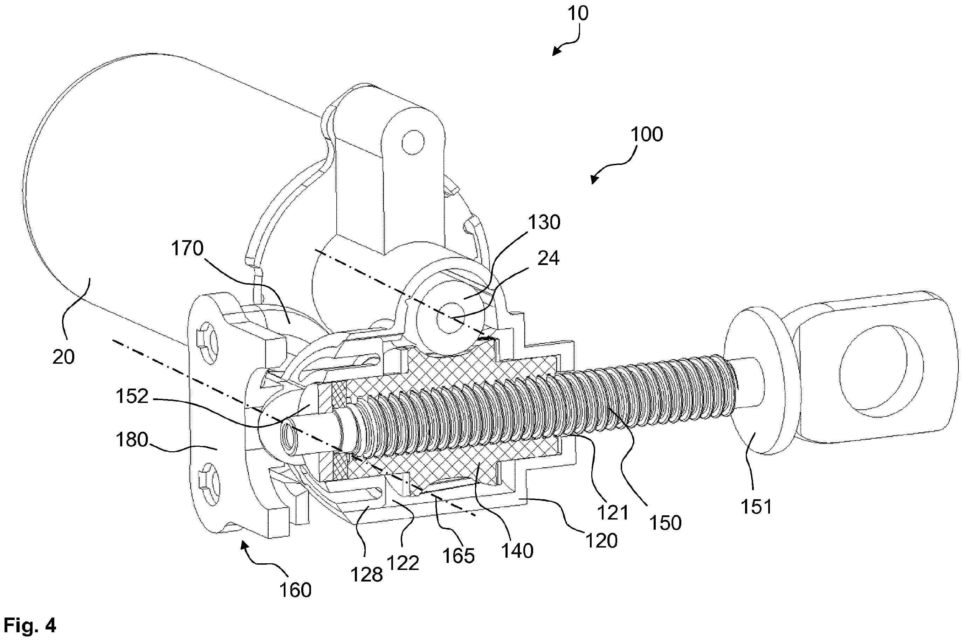

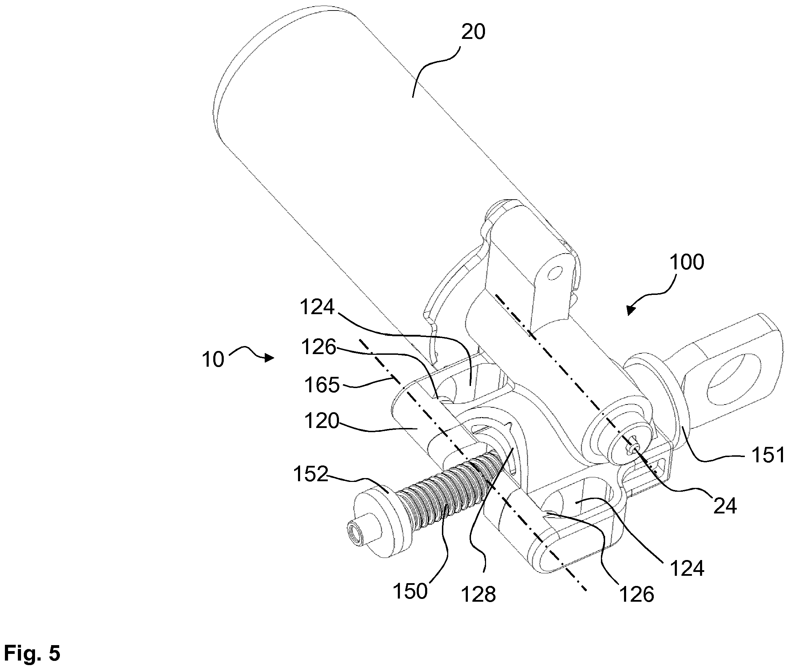

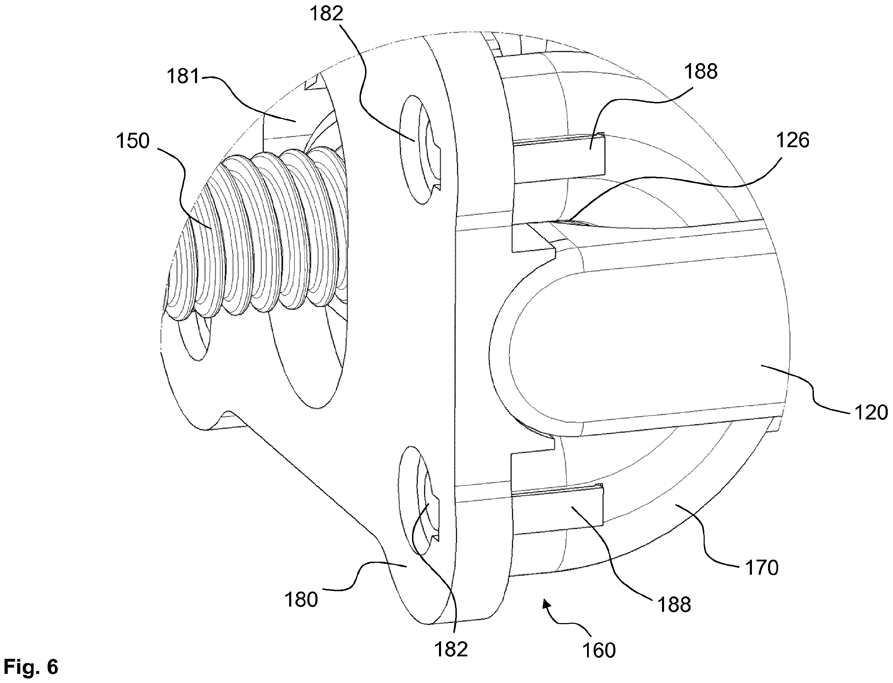

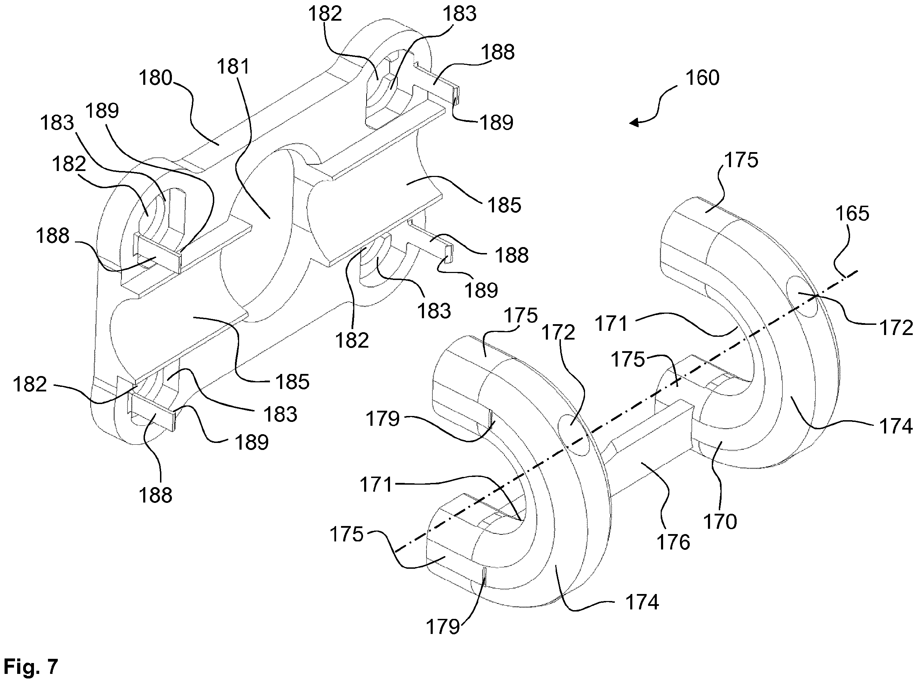

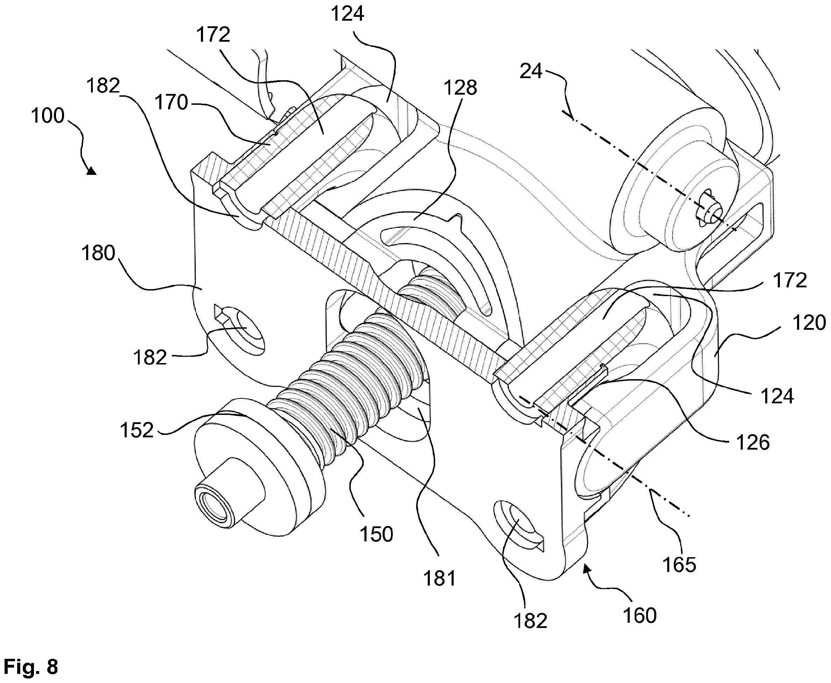

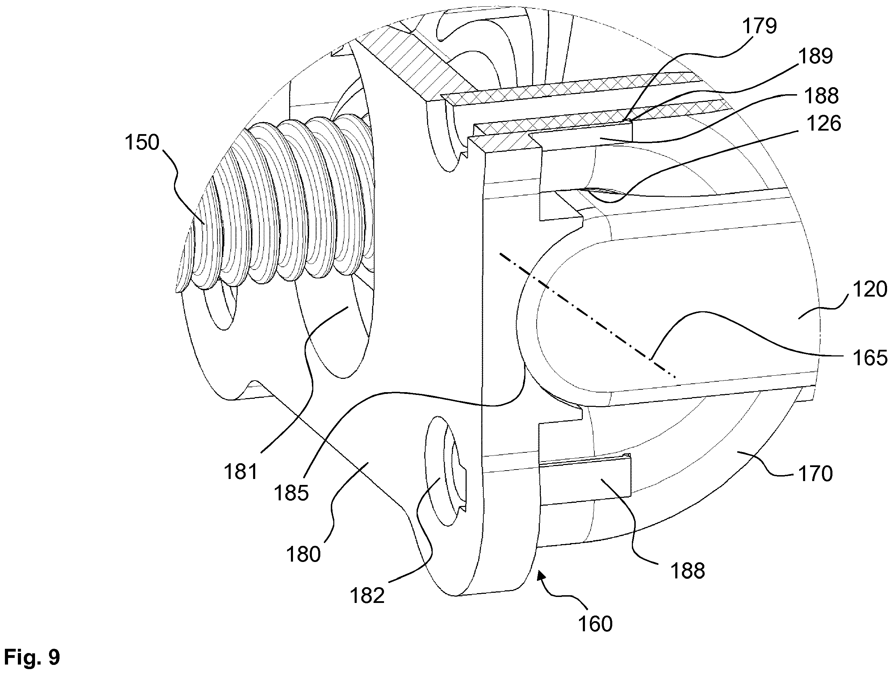

In den Figuren 1 bis 9 ist ein erstes Ausführungsbeispiel eines Stellantriebs 10 für ein Kraftfahrzeug, insbesondere für einen Kraftfahrzeugsitz, dargestellt. Der Stellantrieb 10 umfasst einen Elektromotor 20, ein mit dem Elektromotor 20 verbundenes Getriebe 100 und eine Getriebehaltevorrichtung 160.

Der Elektromotor 20 umfasst eine Ausgangswelle 24, die drehfest mit einer Schnecke 130 des Getriebes 100 verbunden ist. Die Schnecke 130 ist in Eingriff mit einer Spindelmutter 140. Die Spindelmutter 140 ist Teil des Getriebes 100 und in an sich bekannter Weise in Eingriff mit einer Spindel 150.

Das Getriebe 100 umfasst ein Getriebegehäuse 120, das die Schnecke 130 und die Spindelmutter 140 in sich aufnimmt. Das Getriebegehäuse 120 weist dazu einen annähernd zylinderförmigen Bereich zur Aufnahme der Schnecke 130 und einen weiteren, annähernd zylinderförmigen Bereich zur Aufnahme der Spindelmutter 140 auf, der in Richtung der Spindel 150 und senkrecht zu dem zylinderförmigen Aufnahmebereich für die Schnecke 130 orientiert ist.

Die Getriebehaltevorrichtung 160 lagert das Getriebegehäuse 120 schwenkbar um eine Schwenkachse 165. Die Getriebehaltevorrichtung 160 kann beispielsweise an einer Fahrzeugsitzstruktur des Kraftfahrzeugsitzes befestigt sein.

Die Spindel 150 durchläuft das Getriebegehäuse 120. Dazu weist das Getriebegehäuse 120 eine erste Gehäuseöffnung 121 und eine zweite Gehäuseöffnung 122 auf, durch die hindurch die Spindel 150 verläuft. In die zweite Gehäuseöffnung 122 ist eine Lagerbuchse 128 zur Lagerung eines ersten von zwei Enden der Spindelmutter 140 eingeschoben. Ein zweites Ende der Spindelmutter 140 ist unmittelbar im Getriebegehäuse 120 gelagert. Die Spindel 150 durchläuft auch die Lagerbuchse 128.

Das Getriebegehäuse 120 weist zwei Durchgangsöffnungen 124 auf. In Richtung der Schwenkachse 165 gesehen ist neben der zweiten Gehäuseöffnung 122 der annähernd zylinderförmige Bereich des Getriebegehäuses 120, der die Spindelmutter 140 aufnimmt, in zwei diametral gegenüberliegenden Bereichen verbreitert und jeweils mit einer Durchgangsöffnung 124 versehen. Die beiden Durchgangsöffnungen 124 sind langlochförmig, wobei die sich in Richtung der größten lichten Weite der Durchgangsöffnungen 124 erstreckenden Längsachsen der Langlöcher parallel zu einer Mittelachse der Spindel 150 verlaufen.

In einem von der Schnecke 130 abgewandten Bereich der Durchgangs-öffnung 124 sind das Getriebegehäuse 120 und die inneren Wände der Durchgangsöffnungen 124 derart ausgeformt, dass jede Durchgangsöffnung 124 von einem Wellenabschnitt 126 mit einem kreisrunden Querschnitt begrenzt ist. Die beiden Wellenabschnitte 126 definieren die Schwenkachse 165, um die das Getriebegehäuse 120 relativ zu der Getriebehaltevorrichtung 160 schwenkbar ist. Dadurch können Passungenauigkeiten und Toleranzen innerhalb des Stellantriebs 10 und/oder Lagetoleranzen des Stellantriebs 10 relativ zu einer anzutreibenden Komponente ausgeglichen werden. Zudem können manche anzutreibenden Komponenten, wie beispielsweise Viergelenk-Höheneinsteller, eine begrenzte Drehbarkeit des Stellantriebs 10 grundsätzlich voraussetzen.

Die Getriebehaltevorrichtung 160 umfasst einen Haltebügel 170 und ein Schließteil 180, die miteinander verbunden, vorliegend verclipst, sind, und zwischen sich die beiden Wellenabschnitte 126 des Getriebegehäuses 120 lagernd aufnehmen.

Während des Montageprozess wird die Spindelmutter 140 und anschließend die Lagerbuchse 128 durch die zweite Gehäuseöffnung 122 in das Getriebegehäuse 120 eingebracht. Anschließend kann die Getriebehaltevorrichtung 160 an das Getriebegehäuse 120 angebracht werden.

Der Haltebügel 170 umfasst zwei in Richtung der Schwenkachse 165 zueinander versetzt angeordnete U-Bügel 174, die mittels eines Stegs 176 miteinander verbunden sind. Jeder der beiden U-Bügel 174 besteht aus einem halbkreisförmig gekrümmten Profilabschnitt, an dessen beiden Enden sich jeweils ein lineares Steckprofil 175 anschließt. In dem inneren Umfang des halbkreisförmig gekrümmten Profilabschnitts ist eine erste Lagerschale 171 ausgebildet, die sich über einen Winkel von etwa 180° halbzylinderförmig um die Schwenkachse 165 herum erstreckt.

Jeder der beiden U-Bügel 174 weist zwei parallel zur Spindel 150 verlaufende Haltebügelöffnungen 172 auf. Die Außenseiten der beiden U-Bügel 174 haben jeweils eine kerbenförmige Vertiefung 179, die Bestandteil einer nachfolgend noch näher beschriebenen Clipsverbindung ist.

Das Schließteil 180 hat eine annähernd flache, rechteckförmige Grundgeometrie, durch deren Zentrum eine erste Schließteilöffnung 181 verläuft. Die erste Schließteilöffnung 181 ist langlochförmig ausgebildet, wobei die sich in Richtung der größten lichten Weite der ersten Schließteilöffnung 181 erstreckende Längsachse des Langlochs senkrecht zur Schwenkachse 165 verläuft und als Durchgangsloch für die Spindel 150 dient.

In den vier Eckbereichen des Schließteils 180 ist jeweils eine zweite Schließteilöffnung 182 angeordnet. In Richtung der Materialstärke des Schließteils 180 ist mindestens eine, vorliegend jede, zweite Schließteilöffnung 182 durch einen stufenförmigen Absatz 183 in zwei Abschnitte unterteilt. Ein erster Abschnitt ist der Schwenkachse 165 zugewandt und hat einen zu dem Steckprofil 175 der Ü-Bügel 174 komplementären Querschnitt. Ein zweiter, von der Schwenkachse 165 abgewandter Abschnitt der zweiten Schließteilöffnung 182 hat einen Durchmesser, der kleiner ist als die größte Erstreckung des Querschnitts des Steckprofils 175.

Zwei halbzylinderförmige zweite Lagerschalen 185 erstrecken sich in Richtung der Schwenkachse 165 und bilden jeweils gemeinsam mit einer der ersten Lagerschalen 171 des Haltebügels 170 eine umlaufende Nabe, die jeweils einen der beiden Wellenabschnitte 126 in sich drehbar lagert.

In den vier Eckbereichen des Schließteils 180 ist jeweils ein Federarm 188 angeordnet, der sich senkrecht zur flachen Grundgeometrie des Schließteils 180 und in Richtung des Haltebügels 170 erstreckt. Am freistehenden Ende eines jeden Federarms 188 ist eine Nase 189 angearbeitet. Die Nasen 189 greifen in die Vertiefungen 179 des Haltebügels 170, so dass die zuvor erwähnte, an sich bekannte Clipsverbindung, bestehend aus Federarm 188, Nase 189 und Vertiefung 179 gegeben ist.

Die Steckprofile 175 des Haltebügels 170 sind in die zweiten Schließteilöffnungen 182 des Schließteils 180 eingesteckt, so dass das Schließteil 180 in einer zu der Schwenkachse 165 parallelen Richtung formschlüssig mit dem Haltebügel 170 verbunden ist.

Die zweiten Schließteilöffnungen 182 fluchten jeweils mit einer der Haltebügelöffnungen 172. In den Figuren nicht dargestellte Befestigungsmittel, insbesondere Schrauben, verlaufen durch die Haltebügelöffnungen 172 und die zweiten Schließteilöffnungen 182, dienen der Befestigung der Getriebehaltevorrichtung 160 und sichern zusätzlich im montierten Zustand die Verbindung zwischen dem Haltebügel 170 und dem Schließteil 180 der Getriebehaltevorrichtung 160. Die Mittelachsen der Befestigungsmittel verlaufen jeweils parallel zueinander und weitgehend parallel zur Spindel 150.

Die Ausgangswelle 24 ist vollständig außerhalb der Getriebehaltevorrichtung 160 angeordnet.

Der Stellantrieb 10 ist stufenlos zwischen einer ersten Endlage der Spindel 150 und einer zweiten Endlage der Spindel 150 einstellbar. Die Endlagen sind durch Anschläge definiert.

Die erste Endlage ist erreicht, wenn ein fest mit der Spindel 150 verbundener erster Spindelanschlag 151 von außen gegen einen die erste Gehäuseöffnung 121 umrandenden Bereich des Getriebegehäuses 120 anläuft. In entgegengesetzter Richtung ist die zweite Endlage erreicht, wenn ein fest mit der Spindel 150 verbundener zweiter Spindelanschlag 152 durch die erste Schließteilöffnung 181 und die Lagerbuchse 128 hindurch gelaufen ist und an eine dem zweiter Spindelanschlag 152 zugewandte Stirnfläche der Spindelmutter 140 anläuft.

Der erste Spindelanschlag 151 ist eine kreisrunde Scheibe, deren Außendurchmesser größer als der Innendurchmesser der ersten Gehäuse-Öffnung 121 ist.

Der zweite Spindelanschlag 152 ist eine kreisrunde Scheibe, deren Außendurch-messer kleiner als der Innendurchmesser der zweiten Gehäuseöffnung 122, kleiner als der Innendurchmesser der ersten Schließteilöffnung 181 und geringfügig kleiner als der Innendurchmesser der Lagerbuchse 128 ist. Dadurch kann der zweite Spindelanschlag 152 durch die erste Schließteilöffnung 181 und die Lagerbuchse 128 hindurch laufen und läuft nicht an eines dieser Bauteile an. Dies reduziert die notwenige Länge der Spindel 150.

Der zweite Spindelanschlag 152 besteht vorliegend in zwei scheibenförmigen Abschnitten aus unterschiedlichem Material. Ein der Spindelmutter 140 zugewandter Bereich besteht aus einem Kunststoff- oder Gummimaterial. Ein von der Spindelmutter 140 abgewandter Bereich besteht aus einem Metallwerkstoff, insbesondere aus Stahl.

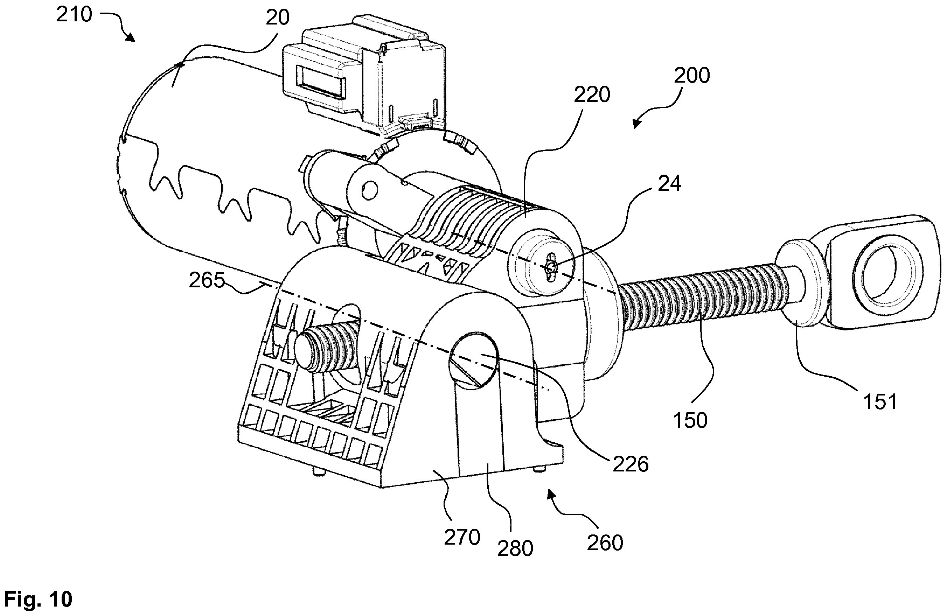

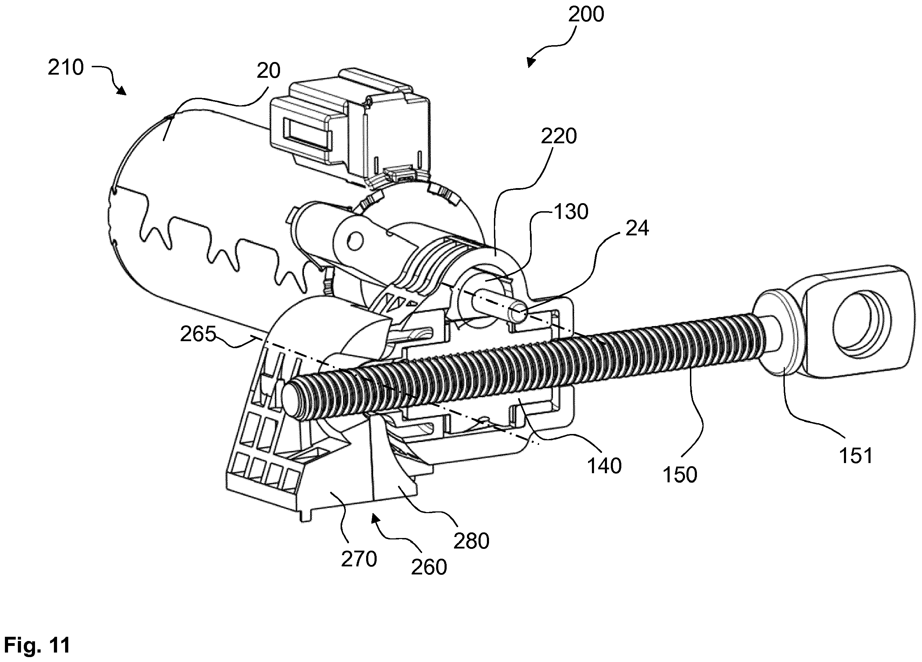

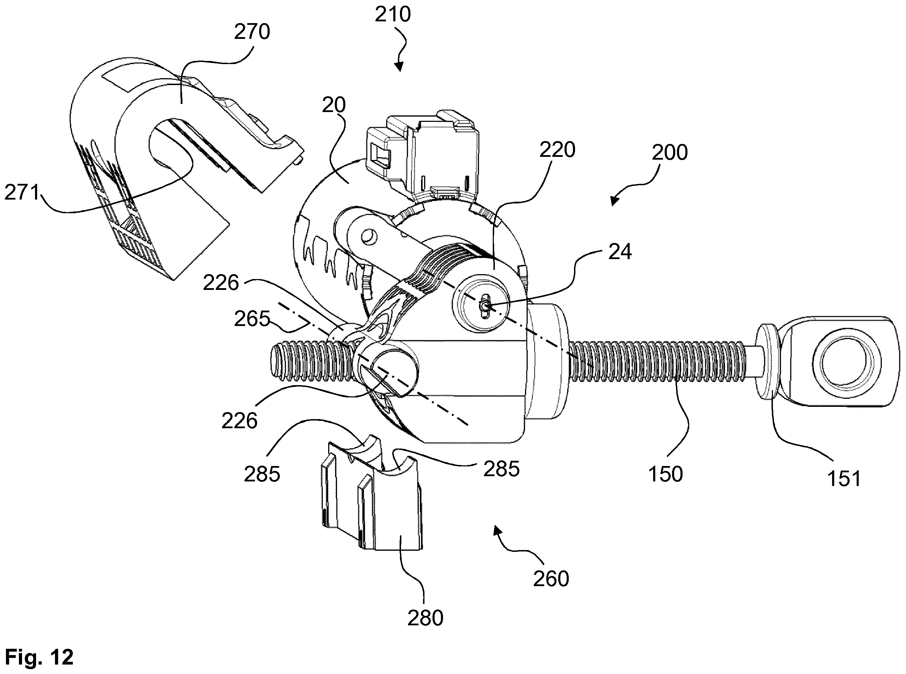

In den Figuren 10 bis 12 ist ein zweites Ausführungsbeispiel eines Stellantriebs 210 dargestellt. Der Stellantriebs 210 umfasst ein Getriebe 200, das sich durch ein in einzelnen Details abgewandeltes Getriebegehäuse 220 von dem Getriebe 100 des ersten Ausführungsbeispiels unterscheidet. Zudem unterscheidet sich eine Getriebehaltevorrichtung 260 von der Getriebehaltevorrichtung 160 des ersten Ausführungsbeispiels. Gegenüber dem ersten Ausführungsbeispiel geänderte Bauteile des Stellantriebs 210 tragen um 100 höhere Bezugszeichen. Sofern nachfolgend nicht abweichend beschrieben, entspricht das zweite Ausführungsbeispiel dem ersten Ausführungsbeispiel.

Der Stellantrieb 210 umfasst einen Elektromotor 20 und das mit dem Elektromotor 20 verbundene Getriebe 200, dessen Getriebegehäuse 220 von einer Getriebehaltevorrichtung 260 schwenkbar um eine Schwenkachse 265 gelagert ist.

An dem Getriebegehäuse 220 sind zwei Wellenabschnitte 226 angeformt, die beidseits und senkrecht zu einer das Getriebegehäuse 220 durchlaufenden Spindel 150 seitlich von dem Getriebegehäuse 220 abstehen. Die beiden Wellenabschnitte 226 definieren eine Schwenkachse 265, um die das Getriebegehäuse 220 relativ zu der Getriebehaltevorrichtung 260 schwenkbar ist. Die beiden Wellenabschnitte haben jeweils einen Kreisquerschnitt, der an einer Stelle eine ebene Abflachung aufweist.

Die Getriebehaltevorrichtung 260 umfasst einen Haltebügel 270 und ein Schließteil 280, die miteinander verbunden, beispielsweise verclipst, sind und zwischen sich die beiden Wellenabschnitte 226 des Getriebegehäuses 220 lagernd aufnehmen.

Der Haltebügel 270 ist in der Art eines U-Bügels ausgeführt, dessen Schenkel annähernd senkrecht zur Spindel 150 verlaufen. In einem inneren Bereich zwischen den Schenkeln des Haltebügels 270 ist eine erste Lagerschale 271 ausgebildet, die sich über einen Winkel von etwa 180° halbzylinderförmig um die Schwenkachse 265 herum erstreckt. Das Schließteil 280 hat ebenfalls eine U-förmige Grundform mit zwei Schenkeln, wobei sich die Schenkel des Schließteils 280 annähernd parallel zur Spindel 150 erstrecken. Beide Schenkel des Schließteils 280 weisen jeweils seitlich eine zweite halbzylinderförmige Lagerschale 285 auf.

Die Länge der Schenkel des Schließteils 280 entspricht dem Abstand der Schenkel des Haltebügels 270. Die Schenkel des Haltebügels 270 nehmen das Schließteil 280 zwischen sich auf. Die beiden halbzylinderförmigen zweiten Lagerschalen 285 bilden jeweils gemeinsam mit der ersten Lagerschale 271 des Haltebügels 270 eine umlaufende Nabe, die jeweils einen der beiden Wellenabschnitte 226 in sich drehbar lagert.

Der Haltebügel 270 weist im Bereich der Schenkelenden mehrere in den Figuren nicht dargestellte Durchgangslöcher auf. Diese Durchgangslöcher dienen der Befestigung des Haltebügels 270 an einem Strukturteil, beispielsweise einer Sitzstruktur. Die Mittelachsen der Befestigungsmittel verlaufen jeweils annähernd senkrecht zur Spindel 150.

Die Ausgangswelle 24 ist vollständig außerhalb der Getriebehaltevorrichtung 260 angeordnet.

### Bezugszeichenliste

- 10, 210: Stellantrieb
- 20: Elektromotor
- 24: Ausgangswelle
- 100, 200: Getriebe
- 120, 220: Getriebegehäuse
- 121: erste Gehäuseöffnung
- 122: zweite Gehäuseöffnung
- 124: Durchgangsöffnung
- 126, 226: Wellenabschnitt
- 128: Lagerbuchse
- 130: Schnecke
- 140: Spindelmutter
- 150: Spindel
- 151: erster Spindelanschlag
- 152: zweiter Spindelanschlag
- 160, 260: Getriebehaltevorrichtung
- 165, 265: Schwenkachse
- 170, 270: Haltebügel
- 171, 271: erste Lagerschale
- 172: Haltebügelöffnung
- 174: U-Bügel
- 175: Steckprofil
- 176: Steg
- 179: Vertiefung
- 180,280: Schließteil
- 181: erste Schließteilöffnung
- 182: zweite Schließteilöffnung
- 183: Absatz
- 185, 285: zweite Lagerschale
- 188: Federarm
- 189: Nase

## Patentansprüche

1. Stellantrieb (10, 210) für ein Kraftfahrzeug, insbesondere einen Kraftfahrzeugsitz, mit
a) einem Elektromotor (20), der eine Ausgangswelle (24) aufweist,
b) einem Getriebe (100, 200), das mit der Ausgangswelle (24) verbunden ist und ein Getriebegehäuse (120, 220) aufweist und
c) einer Getriebehaltevorrichtung (160, 260), die das Getriebegehäuse (120, 220) schwenkbar um eine Schwenkachse (165, 265) lagert, wobei mindestens ein mit der Schwenkachse (165, 265) fluchtender Wellenabschnitt (126, 226) des Getriebegehäuses (120, 220) von einem Haltebügel (170, 270) der Getriebehaltevorrichtung (160, 260) zumindest teilweise umgriffen ist,
wobei die Ausgangswelle (24) außerhalb des Haltebügels (170, 270) angeordnet ist, **dadurch gekennzeichnet, dass**
der Haltebügel (170, 270) eine erste Lagerschale (171, 271) aufweist, und
ein Schließteil (180, 280) eine zweite Lagerschale (185, 285) aufweist, und sich die erste Lagerschale (171, 271) und die zweite Lagerschale (185, 285) zu einer den Wellenabschnitt (126, 226) lagernden Nabe ergänzen.

2. Stellantrieb (10, 210) nach Anspruch 1, **dadurch gekennzeichnet, dass** die Ausgangswelle (24) vollständig außerhalb der Getriebehaltevorrichtung (160, 260) angeordnet ist.

3. Stellantrieb (10, 210) nach Anspruch 1 oder 2, **dadurch gekennzeichnet, dass** eine zumindest mittelbar von der Ausgangswelle (24) antreibbare Spindelmutter (140) drehbar in dem Getriebegehäuse (120, 220) gelagert ist und die Spindelmutter (140) mit einer Spindel (150) derart zusammenwirkt, dass eine Drehung der Spindelmutter (140) zu einer Relativverschiebung zwischen der Spindel (150) und dem Getriebegehäuse (120, 220) führt.

4. Stellantrieb (10, 210) nach Anspruch 3, **dadurch gekennzeichnet, dass** eine Schnecke (130) drehfest mit der Ausgangswelle (24) verbunden ist und die Schnecke (130) in Eingriff mit der Spindelmutter (140) ist.

5. Stellantrieb (10) nach Anspruch 3 oder 4, **dadurch gekennzeichnet, dass** in wenigstens einem Endbereich der Spindel (150) ein radial von der Spindel (150) abstehender Spindelanschlag (152) vorgesehen ist, der in einer Endlage eines Einstellbereichs des Stellantriebs (10) an einer Stirnfläche der Spindelmutter (140) anliegt und dadurch die Endlage definiert.

6. Stellantrieb (10) nach einem der Ansprüche 1 bis 5, **dadurch gekennzeichnet, dass** der Wellenabschnitt (126) zumindest abschnittsweise an eine Durchgangsöffnung (124) des Getriebegehäuses (120) angrenzt oder teilweise in diese hineinragt und der Haltebügel (170) die Durchgangsöffnung (124) durchläuft.

7. Stellantrieb (10) nach einem der Ansprüche 1 bis 6, **dadurch gekennzeichnet, dass** das Schließteil (180) mittels einer Clipsverbindung (179, 188, 189) mit dem Haltebügel (170) verbunden ist.

8. Stellantrieb (10) nach einem der Ansprüche 1 bis 7, **dadurch gekennzeichnet, dass** das Schließteil (180) in einer zu der Schwenkachse (165) parallelen Richtung formschlüssig mit dem Haltebügel (170) verbunden ist.

9. Stellantrieb (10) nach einem der Ansprüche 1 bis 8, **dadurch gekennzeichnet, dass** die Getriebehaltevorrichtung (160) mindestens eine Öffnung (172, 182) zum Durchführen eines Befestigungsmittels, insbesondere einer Schraube, zur Befestigung der Getriebehaltevorrichtung (160) an einem weiteren Bauteil aufweist.

10. Stellantrieb (10) nach Anspruch 9, **dadurch gekennzeichnet, dass** eine in Längsrichtung des Befestigungsmittels ausgerichtete Mittelachse des Befestigungsmittels weitgehend parallel zur Spindel (150) verläuft.

11. Stellantrieb (10, 210) nach einem der Ansprüche 1 bis 10, **dadurch gekennzeichnet, dass** der Elektromotor (20) ein Reduktionsgetriebe aufweist und eine Ausgangswelle des Reduktionsgetriebes die Ausgangswelle (24) des Elektromotors (20) bildet.

12. Stellantrieb (10, 210) nach einem der Ansprüche 1 bis 11, **dadurch gekennzeichnet, dass** der Stellantrieb (10, 210) genau einen Elektromotor (20) aufweist.

## Claims

1. Actuating drive (10, 210) for a motor vehicle, in particular a motor vehicle seat, having
a) an electric motor (20) which has an output shaft (24),
b) a gear mechanism (100, 200) which is connected to the output shaft (24) and which has a gear housing (120, 220), and having
c) a gear retention device (160, 260) which supports the gear housing (120, 220) pivotably about a pivot axis (165, 265), wherein a shaft portion (126, 226) of the gear housing (120, 220) in alignment with the pivot axis (165, 265) is at least partially surrounded by a curved retention member (170, 270) of the gear retention device (160, 260),
wherein the output shaft (24) is arranged outside the curved retention member (170, 270),
**characterized in that**
the curved retention member (170, 270) has a first bearing shell (171, 271), and a closure member (180, 280) has a second bearing shell (185, 285) and the first bearing shell (171, 271) and the second bearing shell (185, 285) complement each other to form a hub which supports the shaft portion (126, 226).

2. Actuating drive (10, 210) according to Claim 1, **characterized in that** the output shaft (24) is arranged completely outside the gear retention device (160, 260).

3. Actuating drive (10, 210) according to Claim 1 or Claim 2, **characterized in that** a spindle nut (140) which can be driven at least indirectly by the output shaft (24) is rotatably supported in the gear housing (120, 220) and the spindle nut (140) cooperates with a spindle (150) in such a manner that a rotation of the spindle nut (140) results in a relative displacement between the spindle (150) and the gear housing (120, 220).

4. Actuating drive (10, 210) according to Claim 3, **characterized in that** an endless screw (130) is connected to the output shaft (24) in a rotationally secure manner and the endless screw (130) is in engagement with the spindle nut (140).

5. Actuating drive (10) according to Claim 3 or Claim 4, **characterized in that** in at least one end region of the spindle (150) there is provided a spindle stop (152) which projects radially from the spindle (150) and which abuts an end face of the spindle nut (140) in an end position of an adjustment range of the actuating drive (10) and thereby defines the end position.

6. Actuating drive (10) according to one of Claims 1 to 5, **characterized in that** the shaft portion (126) at least partially adjoins a through-opening (124) of the gear housing (120) or partially projects therein and the curved retention member (170) extends through the through-opening (124).

7. Actuating drive (10) according to one of Claims 1 to 6, **characterized in that** the closure member (180) is connected to the curved retention member (170) by means of a clip-fit connection (179, 188, 189).

8. Actuating drive (10) according to one of Claims 1 to 7, **characterized in that** the closure member (180) is connected to the curved retention member (170) in a positive-locking manner in a direction parallel with the pivot axis (165).

9. Actuating drive (10) according to one of Claims 1 to 8, **characterized in that** the gear retention device (160) has at least one opening (172, 182) for the introduction of a fixing means, in particular a screw, for fixing the gear retention device (160) to an additional component.

10. Actuating drive (10) according to Claim 9, **characterized in that** a center axis of the fixing means orientated in the longitudinal direction of the fixing means extends substantially parallel with the spindle (150).

11. Actuating drive (10, 210) according to one of Claims 1 to 10, **characterized in that** the electric motor (20) has a reduction gear and an output shaft of the reduction gear forms the output shaft (24) of the electric motor (20).

12. Actuating drive (10, 210) according to one of Claims 1 to 11, **characterized in that** the actuating drive (10, 210) has precisely one electric motor (20).

## Revendications

1. Actionneur (10, 210) pour un véhicule automobile, notamment pour un siège de véhicule automobile, avec :
a) un moteur électrique (20) comportant un arbre de sortie (24) ;
b) un engrenage (100, 200) relié à l'arbre de sortie (24) et comportant un carter d'engrenage (120, 220) ; et
c) un dispositif d'arrêt d'engrenage (160, 260) logeant le carter d'engrenage (120, 220) de façon à pouvoir pivoter autour d'un axe de pivotement (165, 265), au moins une section d'arbre (126, 226) du carter d'engrenage (120, 220) s'alignant avec l'axe de pivotement (165, 265) étant prise au moins en partie par un étrier d'arrêt (170, 270) du dispositif d'arrêt d'engrenage (160, 260) ;
l'arbre de sortie (24) étant disposé à l'extérieur de l'étrier d'arrêt (170, 270) ;
**caractérisé en ce que** :
l'étrier d'arrêt (170, 270) comporte une première coque de palier (171, 271) et une partie de fermeture (180, 280) comporte une deuxième coque de palier (185, 285) et la première coque de palier (171, 271) et la deuxième coque de palier (185, 285) se complètent pour former un moyeu logeant la section d'arbre (126, 226).

2. Actionneur (10, 210) selon la revendication 1, **caractérisé en ce que** l'arbre de sortie (24) est disposé entièrement à l'extérieur du dispositif d'arrêt d'engrenage (160, 260).

3. Actionneur (10, 210) selon la revendication 1 ou 2, **caractérisé en ce qu'**un écrou de broche (140) pouvant être entraîné au moins de façon indirecte par l'arbre de sortie (24) est disposé de façon à pouvoir tourner dans le carter d'engrenage (120, 220) et que l'écrou de broche (140) interagit de telle sorte avec une broche (150) qu'une rotation de l'écrou de broche (140) provoque un déplacement relatif entre la broche (150) et le carter d'engrenage (120, 220).

4. Actionneur (10, 210) selon la revendication 3, **caractérisé en ce qu'**une vis sans fin (130) est reliée solidairement en rotation à l'arbre de sortie (24) et que la vis sans fin (130) est en prise avec l'écrou de broche (140).

5. Actionneur (10) selon la revendication 3 ou 4, **caractérisé en ce qu'**une butée de broche (152) saillant dans le plan radial hors de la broche (150) est prévue dans au moins une zone d'extrémité de la broche (150), ladite butée butant dans une position d'extrémité d'une zone de réglage de l'actionneur (10) contre une surface avant de l'écrou de broche (140) et définissant ainsi la position d'extrémité.

6. Actionneur (10) selon l'une quelconque des revendications 1 à 5, **caractérisé en ce que** la section d'arbre (126) bute au moins en partie contre une ouverture traversante (124) du carter d'engrenage (120) ou rentre en partie dans celle-ci et que l'étrier d'arrêt (170) traverse l'ouverture traversante (124).

7. Actionneur (10) selon l'une quelconque des revendications 1 à 6, **caractérisé en ce que** la partie de fermeture (180) est reliée à l'étrier d'arrêt (170) au moyen d'une liaison clipsée (179, 188, 189).

8. Actionneur (10) selon l'une quelconque des revendications 1 à 7, **caractérisé en ce que** la partie de fermeture (180) est reliée par complémentarité de formes à l'étrier d'arrêt (170) dans une direction parallèle à l'axe de pivotement (165).

9. Actionneur (10) selon l'une quelconque des revendications 1 à 8, **caractérisé en ce que** le dispositif d'arrêt d'engrenage (160) comporte au moins une ouverture (172, 182) pour réaliser le moyen de fixation, notamment une vis, pour la fixation du dispositif d'arrêt d'engrenage (160) à un composant supplémentaire.

10. Actionneur (10) selon la revendication 9, **caractérisé en ce qu'**un axe central du moyen de fixation orienté dans la direction longitudinale du moyen de fixation s'étend largement parallèlement à la broche (150).

11. Actionneur (10, 210) selon l'une quelconque des revendications 1 à 10, **caractérisé en ce que** le moteur électrique (20) comporte un engrenage de réduction et qu'un arbre de sortie de l'engrenage de réduction forme l'arbre de sortie (24) du moteur électrique (20).

12. Actionneur (10, 210) selon l'une quelconque des revendications 1 à 11, **caractérisé en ce que** l'actionneur (10, 210) comporte précisément un moteur électrique (20).
